# EUROPÄISCHE PATENTSCHRIFT

(11) **EP 2 513 875 B1**
(45) Veröffentlichungstag und Bekanntmachung des Hinweises auf die Patenterteilung: **04.11.2020**
(21) Anmeldenummer: 10795622.9
(22) Anmeldetag: 16.12.2010
(51) Int. Cl.: G07D 7/12

(54) **SPEKTRALSENSOR ZUR PRÜFUNG VON WERTDOKUMENTEN**
SPECTRAL SENSOR FOR INSPECTING VALUE DOCUMENTS
SPECTRODÉTECTEUR POUR LA VÉRIFICATION DE DOCUMENTS DE VALEUR

(30) Priorität: 18.12.2009 DE 102009058805
(43) Veröffentlichungstag der Anmeldung: 24.10.2012
(73) Patentinhaber: Giesecke+Devrient Currency Technology GmbH, 81677 München (DE)
(72) Erfinder: FRANKENBERGER, Jörg, 85570 Markt Schwaben (DE); DECKENBACH, Wolfgang, 83135 Schechen (DE); RAUSCHER, Wolfgang, 81677 München (DE)
(86) Internationale Anmeldenummer: PCT/EP2010/007704
(87) Internationale Veröffentlichungsnummer: WO 2011/072863

(56) Entgegenhaltungen:
- EP-A1- 1 953 709
- DE-U1-202007 013 090
- GB-A- 1 470 737
- GB-A- 2 122 743
- GB-A- 2 366 371
- US-A- 5 498 879
- US-A1- 2008 259 314

## Beschreibung

Die Erfindung betrifft einen Spektralsensor zur Prüfung von Wertdokumenten und ein Verfahren zur Prüfung von Wertdokumenten mit Hilfe des Spektralsensors.

Zur Prüfung von Wertdokumenten werden üblicherweise Sensoren verwendet, mit denen die Art der Wertdokumente bestimmt wird und/oder mit denen die Wertdokumente auf Echtheit und/oder auf ihren Zustand geprüft werden. Derartige Sensoren werden zur Prüfung von Wertdokumenten wie z.B. Banknoten, Schecks, Ausweisen, Kreditkarten, Scheckkarten, Tickets, Gutscheinen und dergleichen verwendet. Die Prüfung der Wertdokumente erfolgt in einer Vorrichtung zur Wertdokumentbearbeitung, in der, je nach den zu prüfenden Wertdokumenteigenschaften, einer oder mehrere unterschiedliche Sensoren enthalten sind. Üblicherweise werden die Wertdokumente bei der Prüfung durch den Sensor abgetastet, wobei der Sensor und das Wertdokument relativ zueinander bewegt werden.

Bei einer Vielzahl von Sensoren werden die Wertdokumente mit Lichtquellen bestimmter Farben beleuchtet, um aus der Remission der Wertdokumente bei diesen Farben die visuell sichtbare Farbe des Wertdokuments zu ermitteln. Entsprechend den drei verschiedenen Farbrezeptoren des menschlichen Auges haben diese Sensoren nur drei Farbkanäle, die z.B. durch rote, grüne und blaue Leuchtdioden realisiert sind (RGB-Sensoren). Mit derartigen optischen Sensoren, die nur drei Farbkanäle aufweisen, kann jedoch keine spektrale Intensitätsverteilung des von dem Wertdokument ausgehenden Lichts aufgenommen werden.

Die GB2366371 A offenbart eine Beleuchtungseinrichtung für Banknoten, die LEDs sechs verschiedener LED-Gruppen mit unterschiedlicher Peak-Wellenlänge aufweist: eine LED-Gruppe im grünen, eine LED-Gruppe im roten und vier LED-Gruppen im Infraroten.

Zur Aufnahme einer spektralen Intensitätsverteilung sind Spektralsensoren bekannt, die die Wertdokumente mit Weißlicht beleuchten und das von den Wertdokumenten remittierte Licht spektral aufgelöst detektieren. Bei derartigen Spektralsensoren wird ein Beugungsgitter für die spektrale Aufspaltung des von den Wertdokumenten remittierten Lichts verwendet. Die spektrale Aufspaltung erfordert jedoch einen relativ langen Strahlengang vom Beugungsgitter bis zur Detektorzeile, so dass derartige Spektralsensoren einen großen Bauraum benötigen. Außerdem ist der mit einem solchen Spektralsensor erfassbare Spektralbereich relativ schmal, so dass sich damit keine spektrale Intensitätsverteilung über einen breiten Spektralbereich aufnehmen lässt. Denn die Beugungsgitter sind auf eine bestimmte Wellenlänge optimiert, so dass der Reflexionsfaktor des Gitters für Licht dieser Wellenlänge möglichst groß ist. Für davon abweichende Wellenlängen fällt der Reflexionsfaktor des Beugungsgitters dagegen stark ab, so dass von dem Licht dieser Wellenlängen nur sehr geringe Lichtintensitäten zur Detektion zur Verfügung stehen.

Die GB2122743 A offenbart, Banknoten im Hinblick auf metamere Farben zu prüfen., doch beschreibt nicht, wie diese metameren Farben voneinander unterschieden werden können.

Eine Aufgabe der vorliegenden Erfindung ist es daher, einen verbesserten Spektralsensor zur Prüfung von Wertdokumenten bereit zu stellen, der von einem oder mehreren Bereichen eines Wertdokuments eine spektrale Intensitätsverteilung im visuell sichtbaren Spektralbereich und/oder im Nahinfrarot-Spektralbereich aufnehmen kann und metamere Farben voneinander unterscheiden kann.

Diese Aufgabe wird durch die Gegenstände der unabhängigen Ansprüche gelöst. In davon abhängigen Ansprüchen sind vorteilhafte Weiterbildungen und Ausgestaltungen der Erfindung angegeben.

Der Spektralsensor weist eine Beleuchtungseinrichtung zum Beleuchten des durch den Spektralsensor zu prüfenden Wertdokuments, eine Abbildungsoptik und eine Detektionseinrichtung auf. Die Beleuchtungseinrichtung weist eine Vielzahl von Lichtquellen auf, deren Emissionsspektren voneinander verschieden sind. Die Emissionsspektren dieser Lichtquellen liegen im visuell sichtbaren Spektralbereich und/oder im Nahinfrarot-Spektralbereich. Die Abbildungsoptik bildet das von der Beleuchtungseinrichtung ausgesendete Licht auf einen Bereich des zu prüfenden Wertdokuments ab. Durch die Abbildungsoptik wird erreicht, dass ein klar definierter und räumlich begrenzter Bereich des zu prüfenden Wertdokuments beleuchtet werden kann. Die Detektionseinrichtung ist zum Detektieren von Licht ausgebildet, das, beim Betreiben des Spektralsensors, wenn das Wertdokument durch die Beleuchtungseinrichtung beleuchtet wird, von dem beleuchteten Bereich ausgeht.

Die Beleuchtungseinrichtung des Spektralsensors weist eine Vielzahl verschiedener Lichtquellen auf, deren Emissionsspektren voneinander verschieden sind. Innerhalb der Beleuchtungseinrichtung können die Lichtquellen nebeneinander angeordnet sein, z.B. in einem zweidimensionalen Raster, insbesondere auf einer den Lichtquellen gemeinsamen Lichtquellen-Aufnahme. Die Lichtquellen können auch ringförmig, z.B. um die Detektionseinrichtung herum angeordnet sein. Die Abbildungsoptik ist dazu ausgebildet, das Emissionslicht jeder der Lichtquellen auf ein zu prüfendes Wertdokument abzubilden. Das von der Beleuchtungseinrichtung ausgesendete Licht wird durch die Abbildungsoptik über einen definierten Strahlengang auf den beleuchteten Bereich des Wertdokuments abgebildet. Die Abbildungsoptik weist dazu z.B. eines oder mehrere refraktive optische Elemente (z.B. Linsen) und/oder diffraktive und/oder spiegelnde optische Elemente auf, die das von den Lichtquellen emittierte Licht auf das Wertdokument abbilden. Vorzugsweise ist die Abbildungsoptik als Abbildungslinse ausgebildet. Dadurch dass eine Abbildung des Beleuchtungslichts auf das Wertdokument erfolgt, ist der beleuchtete Bereich des Wertdokuments klar definiert und räumlich begrenzt. Dies stellt einen Vorteil gegenüber einer direkten Beleuchtung des Wertdokuments durch die Lichtquellen (ohne dazwischen liegende Optik) dar und gegenüber einer einfachen Lichtleiteroptik (ohne Abbildungsoptik), durch die das Licht nicht abgebildet wird, sondern ohne definierten Strahlengang vom Lichtleiter auf das Wertdokument gebracht wird.

Um das von der Beleuchtungseinrichtung ausgesendete Licht der verschiedenen Lichtquellen weitgehend auf denselben beleuchteten Bereich des Wertdokuments abzubilden, wird die Abbildungsoptik vorzugsweise so angeordnet, dass der beleuchtete Bereich des Wertdokuments genau oder näherungsweise im Brennpunkt der Abbildungsoptik liegt. Dadurch kann erreicht werden, dass trotz der Beleuchtung des Wertdokuments mit verschiedenen nebeneinander angeordneten Lichtquellen, im Wesentlichen derselbe Bereich des zu prüfenden Wertdokuments beleuchtet und durch die Detektionseinrichtung detektiert werden kann. Die Abbildungsoptik kann dazu ausgebildet sein, einen fleckförmigen Bereich auf dem Wertdokument zu beleuchten, insbesondere einen runden Beleuchtungsfleck. Sie kann aber auch dazu ausgebildet sein, einen streifenförmigen Bereich auf dem Wertdokument zu beleuchten. Als Abbildungsoptik kann im ersten Fall z.B. eine radialsymmetrische Abbildungsoptik verwendet werden und im zweiten Fall eine Zylinderoptik verwendet werden.

Das von den Lichtquellen emittierte Licht kann mit Hilfe einer Sammeloptik gesammelt werden, die das gesammelte Licht in geeigneter Weise auf die Abbildungsoptik richtet und die ein Bestandteil der Beleuchtungseinrichtung sein kann. Die Lichtquellen, die Sammeloptik und die Abbildungsoptik sind in diesem Fall so zueinander angeordnet, dass das Emissionslicht jeder der Lichtquellen durch die Sammeloptik und die Abbildungsoptik auf ein Wertdokument abgebildet werden kann, das, beim Betreiben des Spektralsensors, durch den Spektralsensor geprüft werden soll. Die Sammeloptik ist zwischen den Lichtquellen und der Abbildungsoptik angeordnet, um das von den Lichtquellen ausgesendete Licht zu sammeln. Die Sammeloptik kann durch eine Vielzahl nebeneinander angeordneter, z.B. refraktiver oder diffraktiver, Linsen realisiert sein, von denen jede das Emissionslicht einer der Lichtquellen sammelt. Die Linsen der Sammeloptik und die Abbildungsoptik sind dabei vorzugsweise derart angeordnet und ausgebildet, dass die Lichtquellen unscharf auf den beleuchteten Bereich des Wertdokuments abgebildet werden. Außerdem ist bevorzugt, dass jede Lichtquelle der Beleuchtungseinrichtung von der ihr zugeordneten Linse weniger als die Brennweite der Linse entfernt ist. Die Linsen der Sammeloptik können als Einzellinsen ausgebildet sein oder als Mikrolinsen eines Mikrolinsenarrays.

In anderen Ausführungsformen wird die Sammeloptik durch einen oder mehrere Lichtleiter gebildet, der bzw. die zwischen den Lichtquellen und der Abbildungsoptik angeordnet sind. Dabei kann ein gemeinsamer Lichtleiter für alle Lichtquellen vorgesehen sein oder für jede Lichtquelle ein eigener Lichtleiter. Das Emissionslicht der Lichtquellen wird in den bzw. in die Lichtleiter eingekoppelt und der Lichtleiter leitet das Emissionslicht der Lichtquellen zu der Abbildungsoptik. Das aus dem Lichtleiter austretende Licht wird durch die Abbildungsoptik auf das Wertdokument abgebildet. Als Lichtleiter kann z.B. eine Glasfaser oder ein Lichtleiterkörper mit einer runden oder streifenförmigen Lichtaustrittsfläche verwendet werden.

Die Beleuchtungseinrichtung weist eine Vielzahl verschiedener Lichtquellen auf, deren Emissionsspektren im visuell sichtbaren Spektralbereich und/oder im Nahinfrarot-Spektralbereich liegen und voneinander verschieden sind. Das heißt, die Vielzahl der Lichtquellen stellt eine Vielzahl verschiedener Emissionsspektren bereit, deren Intensitätsmaxima bei verschiedenen Wellenlängen liegen. Beispielsweise ist jede Lichtquelle der Beleuchtungseinrichtung zur Emission einer Emissionslinie bei einer bestimmten Wellenlänge ausgebildet, deren spektrale Lage sich von den Emissionslinien aller anderen Lichtquellen der Beleuchtungseinrichtung unterscheidet. Alternativ kann die Beleuchtungseinrichtung aber auch mehrere gleiche Lichtquellen aufweisen, z.B. um auch in einem Spektralbereich mit lichtschwachen Lichtquellen eine ausreichende Beleuchtungsintensität zu erhalten. Vorzugsweise deckt die Vielzahl der Lichtquellen einen Abschnitt des Nahinfrarot-Spektralbereichs derart ab, dass der Spektralsensor, durch das Detektieren der Messwerte, eine spektrale Intensitätsverteilung in dem Abschnitt des Nahinfrarot-Spektralbereichs aufnehmen kann. Die Lichtquellen der Beleuchtungseinrichtung sind z.B. so gewählt, dass der Spektralsensor eine spektrale Intensitätsverteilung in dem Nahinfrarot-Spektralbereich aufnehmen kann, die sich vom visuell sichtbaren Spektralbereich bis in den Nahinfrarot-Spektralbereich erstreckt, beispielsweise vom visuell sichtbaren Spektralbereich bis mindestens zu einer Wellenlänge von 1000 nm, vorzugweise bis mindestens zu einem Wellenlänge von 1200 nm. Alternativ oder zusätzlich deckt die Vielzahl der Lichtquellen auch einen Abschnitt des visuell sichtbaren Spektralbereichs derart ab, dass der Spektralsensor eine spektrale Intensitätsverteilung des detektieren Lichts in dem Abschnitt des visuell sichtbaren Spektralbereichs aufnehmen kann. Zur Unterscheidung von metameren Farben deckt die Vielzahl der Lichtquellen den roten Spektralbereich und/oder den grünen Spektralbereich und/oder den blauen Spektralbereich derart ab, dass in dem jeweiligen Spektralbereich mindestens zwei verschiedene Emissionsspektren der Lichtquellen liegen und/oder sie deckt den Nahinfrarot-Spektralbereich von 750 nm bis 1000 nm derart ab, dass in dem jeweiligen Spektralbereich mindestens drei verschiedene Emissionsspektren der Lichtquellen liegen.

Die Beleuchtungseinrichtung kann auch eine oder mehrere Lichtquellen aufweisen, deren Emissionsspektrum im ultravioletten Spektralbereich liegt. Als Lichtquellen werden bevorzugt lichtemittierende Dioden eingesetzt, beispielsweise Leuchtdioden (LED), insbesondere Halbleiter-Leuchtdioden oder organische Leuchtdioden (OLED), und/oder Laserdioden, insbesondere vertikal-cavity surface emitting laser (VCSEL).

Beim Betreiben des Spektralsensors werden die Lichtquellen nacheinander ein- und ausgeschaltet, um einen Bereich des Wertdokuments mit einer Be-leuchtungssequenz aus Lichtpulsen mit verschiedenen Emissionsspektren zu beleuchten. Die Detektionseinrichtung ist zum Detektieren von Licht ausgebildet, das, beim Betreiben des Spektralsensors, von dem mit der Beleuchtungssequenz beleuchteten Bereich des Wertdokuments ausgeht. Für jeden der Lichtpulse der Beleuchtungssequenz wird dabei ein Messwert detektiert, um eine spektrale Intensitätsverteilung des detektierten Lichts aufzunehmen. Die detektierten Messwerte entsprechen jeweils der Lichtintensität, die bei der Beleuchtung mit einem der Lichtpulse der Beleuchtungssequenz detektiert wird. Die spektrale Intensitätsverteilung des detektierten Lichts wird aus den detektieren Messwerten abgeleitet.

Zur Prüfung des Wertdokuments wird die Beleuchtungssequenz periodisch wiederholt. Zumindest über einem Teilbereich des zu prüfenden Wertdokuments wird das Wertdokument durch dieselbe Beleuchtungssequenz beleuchtet. In anderen Teilbereichen kann das Wertdokument durch eine andere Beleuchtungssequenz beleuchtet werden. Die Beleuchtungssequenzen können dabei in Abhängigkeit des zu prüfenden Wertdokuments gewählt werden. Bereits aus den Messwerten, die während einer einzigen Beleuchtungssequenz detektiert werden, kann eine spektrale Intensitätsverteilung des von dem Wertdokument ausgehenden Lichts ermittelt werden. Alternativ können aber auch Messwerte der verschiedenen Beleuchtungssequenzen zusammengefasst werden, vorzugsweise Messwerte mindestens zweier aufeinanderfolgender Beleuchtungssequenzen. Beispielsweise werden mindestens zwei Messwerte, die beim Beleuchten mit derselben Lichtquelle in aufeinanderfolgenden Beleuchtungssequenzen detektiert werden, zu einem resultierenden Messwert zusammengefasst.

Beim Betreiben des Spektralsensors werden die zu prüfenden Wertdokumente mit einer Transportgeschwindigkeit an dem Spektralsensor vorbeitransportiert. Bevorzugt weist die Beleuchtungssequenz eine Dauer auf, die so auf die Transportgeschwindigkeit des zu prüfenden Wertdokuments abgestimmt ist, dass alle Lichtpulse, die während der Beleuchtungssequenz von den Lichtquellen emittiert werden, nahezu denselben Bereich des Wertdokuments beleuchten. Insbesondere weisen der durch den ersten Lichtpuls der Beleuchtungssequenz beleuchtete Bereich des Wertdokuments und der durch den letzten Lichtpuls derselben Beleuchtungssequenz beleuchtete Bereich des Wertdokuments einen Überlapp von mindestens 75% auf. Das heißt für alle Lichtpulse derselben Beleuchtungssequenz sind die Flächen der beleuchteten Bereiche, die durch diese Lichtpulse nacheinander beleuchtet werden, trotz der Bewegung des Wertdokuments während der Beleuchtungssequenz, zu mindestens 75% identisch.

Bevorzugt ist der Spektralsensor nicht zur vollflächigen Prüfung des Wertdokuments, sondern zur Prüfung des Wertdokuments in einer oder in mehreren Spuren auf dem Wertdokument ausgebildet. Im Fall der Prüfung in mehreren Spuren sind zwischen den Spuren jeweils Wertdokumentbereiche angeordnet, die durch den Spektralsensor nicht geprüft werden. Die zur Prüfung des Wertdokuments beleuchteten Bereiche bilden Spuren, die parallel zueinander und entlang der Transportrichtung des Wertdokuments verlaufen. Die Spuren sind auf dem Wertdokument diskret verteilt. Für jede der Spuren ist zumindest eine Beleuchtungseinrichtung, eine Abbildungsoptik und eine Detektionseinrichtung gemäß der obigen Beschreibung vorgesehen. Die Beleuchtungssequenzen folgen vorzugweise so schnell aufeinander, dass das Wertdokument entlang jeder der Spuren quasi kontinuierlich geprüft wird.

Der Abschnitt des Nahinfrarot-Spektralbereichs, den die Lichtquellen abdecken, umfasst zumindest die Wellenlängen von 750 nm bis 1000 nm und kann auch die Wellenlängen von 1000 nm bis 1600 nm umfassen, optional auch Wellenlängen oberhalb von 1600 nm. Vorzugsweise ist der Spektralsensor mit Lichtquellen ausgestattet, die den Spektralbereich oberhalb von 1000 nm abdecken. Denn vorteilhaft kann der Spektralsensor dann auch eine spektrale Intensitätsverteilung in diesem langwelligen Spektralbereich aufnehmen, für den die bisher üblichen Spektralsensoren, die siliziumbasierte Detektoren verwenden, nicht geeignet sind. Der Abschnitt des visuell sichtbaren Spektralbereichs, den die Lichtquellen abdecken, kann z.B. der zu einer bestimmten Farbe gehörende Spektralbereich sein, z.B. der vom menschlichen Auge als rot wahrgenommene Spektralbereich. Die Lichtquellen können aber auch zwei oder mehrere Farben abdecken, so dass sich die spektrale Intensitätsverteilung über zwei oder mehrere Farben erstreckt, z.B. über den grünen und den roten Spektralbereich. Die Emissionsspektren der Lichtquellen der Beleuchtungseinrichtung umfassen z.B. mindestens 5 verschiedene Emissionsspektren im visuell sichtbaren Spektralbereich. Der Abschnitt des visuell sichtbaren Spektralbereichs, den die Lichtquellen abdecken, kann aber auch der gesamte visuell sichtbare Spektralbereich sein.

Die spektrale Empfindlichkeit des Auges beruht auf nur drei Farbkanälen. Daher existieren Farben, die zwar voneinander verschieden sind, aber im menschlichen Auge denselben Farbeindruck auslösen. Solche Farben, die zwar verschiedene spektrale Eigenschaften haben, aber für den Menschen, unter den gleichen Beleuchtungsbedingungen, gleich aussehen, werden als metamere Farben bezeichnet. Bisherige Sensoren, die - wie das menschliche Auge - nur drei Farbkanäle aufweisen, z.B. RGB-Sensoren, können metamere Farben nicht voneinander unterscheiden. Der erfindungsgemäße Spektralsensor ist jedoch dazu ausgebildet, metamere Farben zu unterscheiden. Bei dem Spektralsensor sind die Emissionsspektren der Lichtquellen so gewählt, dass metamere Farben anhand der durch Spektralsensor aufgenommenen spektralen Intensitätsverteilungen, voneinander unterschieden werden können. Zum Beispiel kann der Spektralsensor für zwei metamere Farben, die auf demselben oder auf verschiedenen Wertdokumenten enthalten sind, jeweils eine spektrale Intensitätsverteilung aufnehmen, so dass diese miteinander verglichen und deren Unterschiede festgestellt werden können.

Bei dem Spektralsensor sind die Emissionsspektren der Lichtquellen vorzugsweise spektral so gelegen, dass metamere Farben, die in dem beleuchteten Bereich des Wertdokuments enthalten sein können, anhand der jeweiligen spektralen Intensitätsverteilung voneinander unterschieden werden können, die der Spektralsensor, beim Detektieren des von der metameren Farbe ausgehenden Lichts aufnehmen kann. Die Vielzahl der Lichtquellen deckt den roten Spektralbereich und/oder den grünen Spektralbereich und/oder den blauen Spektralbereich und/oder den Nahinfrarot-Spektralbereich von 750 nm bis 1000 nm derart ab, dass durch den Spektralsensor metamere Farben, die in dem beleuchteten Bereich enthalten sein können, anhand der spektralen Intensitätsverteilung voneinander unterschieden werden können, die der Spektralsensor beim Detektieren des von der metameren Farbe ausgehenden Lichts aufnimmt. Zur Unterscheidung von metameren Farben, deren optische Eigenschaften sich innerhalb eines bestimmten Farbkanals (z.B. rot) unterscheiden, werden die Lichtquellen so ausgewählt, dass innerhalb des Spektralbereichs dieses Farbkanals mindestens zwei verschiedene Emissionsspektren der Lichtquellen liegen. Damit der Spektralsensor viele verschiedene metamere Farben voneinander unterscheiden kann, ist es bevorzugt, auch weitere Farbkanäle (z.B. grün, blau) durch jeweils mindestens zwei verschiedene Emissionsspektren abzudecken. Analoges gilt für die Unterscheidung von Farben, deren optische Eigenschaften sich im Nahinfrarot-Spektralbereich unterscheiden. Es ist daher bevorzugt, dass die Vielzahl der Lichtquellen den roten Spektralbereich und/oder den grünen Spektralbereich und/oder den blauen Spektralbereich derart abdecken, dass in dem jeweiligen Spektralbereich mindestens zwei verschiedene Emissionsspektren der Lichtquellen liegen. Bezogen auf den Nahinfrarot-Spektralbereich deckt die Vielzahl der Lichtquellen den Nahinfrarot-Spektralbereich von 750 nm bis 1000 nm und optional auch den Nahinfrarot-Spektralbereich von 1000 nm bis 1600 nm derart ab, dass in dem jeweiligen Spektralbereich mindestens drei, vorzugsweise mindestens fünf, verschiedene Emissionsspektren der Lichtquellen liegen.

Außerdem überlappen die Emissionsspektren von mindestens drei, insbesondere von mindestens fünf, der Lichtquellen, die spektral zueinander benachbart sind, spektral und/oder weisen jeweils voneinander verschiedene Emissionsmaxima auf, deren spektraler Abstand höchstens 60 nm beträgt. Beispielsweise überlappt jedes der Emissionsspektren der Lichtquellen der Beleuchtungseinrichtung spektral mit zumindest mit einem der Emissionsspektren einer der anderen spektral benachbarten Lichtquellen der Beleuchtungseinrichtung.

Die Detektionseinrichtung weist vorzugsweise eine spektrale Empfindlichkeit auf, die spektral so breitbandig ist, dass durch die Detektionseinrichtung das Emissionslicht jeder der Lichtquellen der Beleuchtungseinrichtung detektierbar ist. Insbesondere ist die Detektionseinrichtung zumindest zur Detektion von Licht im visuell sichtbaren Spektralbereich ausgebildet und zur Detektion von Licht des daran angrenzenden Nahinfrarot-Spektralbereichs bis mindestens 1000 nm. Die üblicherweise verwendeten siliziumbasierten Detektionseinrichtungen sind zwar für den visuell sichtbaren Spektralbereich geeignet, aber nicht für den Spektralbereich über 1000 nm. Besonders vorteilhaft ist es daher, den Spektralsensor mit einer Detektionseinrichtung auszustatten, die sowohl zur Detektion von Licht im visuell sichtbaren Spektralbereich als auch des Nahinfrarot-Spektralbereichs bis über 1000 nm hinaus ausgebildet ist. Insbesondere weist der Spektralsensor zu diesem Zweck als Detektionseinrichtung einen InGaAs-Photodetektor auf, der sowohl zur Detektion von Licht im Nahinfrarot-Spektralbereich ausgebildet ist, insbesondere zur Detektion von Wellenlängen oberhalb von 1000 nm, als auch zur Detektion von Licht im visuell sichtbaren Spektralbereich.

Zum Detektieren des Remissionslichts kann der Spektralsensor auch mehrere gleiche Detektionseinrichtungen enthalten, z.B. um das Remissionslicht über einen größeren Winkelbereich zu erfassen. Der Spektralsensor kann auch mehrere verschiedene Detektionseinrichtungen aufweisen, z.B. um den mit dem Spektralsensor erfassbaren Spektralbereich zu erweitern. Die verschiedenen Detektionseinrichtungen können dabei nebeneinander angeordnet sein oder hintereinander, z.B. in Form einer Sandwich-Struktur.

Die von der Detektionseinrichtung aufgenommenen Messwerte werden durch eine Auswerteeinrichtung ausgewertet, die Bestandteil des Spektralsensors sein kann oder auch durch eine externe Auswerteeinrichtung gebildet wird. Vorzugsweise erfolgt bereits durch den Spektralsensor, insbesondere durch eine interne Auswerteeinrichtung des Spektralsensors, zumindest eine Vorverarbeitung der Messwerte. Die weitere Auswertung kann ebenfalls durch die interne Auswerteeinrichtung oder alternativ durch eine zentrale Auswerteeinrichtung der Vorrichtung erfolgen, in die der Spektralsensor eingebaut ist.

Vor der Detektionseinrichtung kann eine Detektionsoptik angeordnet sein, durch die von dem Wertdokument ausgehendes Licht gesammelt und auf einen lichtempfindlichen Bereich der Detektionseinrichtung gerichtet wird.

Die Detektionsoptik umfasst z.B. eines oder mehrere refraktive oder diffraktive optische Elemente oder Spiegel. Die Detektionsoptik und die Detektionseinrichtung sind derart ausgebildet und angeordnet, dass, beim Betreiben des Spektralsensors, von dem Licht, das von dem beleuchteten Bereich ausgeht, nur Licht aus einem Detektionsbereich des Wertdokuments detektiert wird, der vollständig innerhalb des beleuchteten Bereichs angeordnet ist. Dadurch dass der Detektionsbereich vollständig innerhalb des beleuchteten Bereichs angeordnet ist, wird erreicht, dass die detektierte Lichtintensität unempfindlich ist gegenüber Flatterbewegungen des Wertdokuments, die beim Transportieren des Wertdokuments auftreten können. Der Spektralsensor wird dadurch außerdem auch tolerant gegenüber eventuellen Positionsschwankungen der Beleuchtungseinrichtung, der Abbildungsoptik, der Detektionseinrichtung oder der Detetktionsoptik, die sich bei der Herstellung oder beim Zusammenbauen des Spektralsensors ergeben können. Vorzugsweise ist der Detektionsbereich vollständig innerhalb eines homogen beleuchteten Abschnitts des beleuchteten Bereichs angeordnet. In dem homogen beleuchteten Abschnitt ist die Intensität der Beleuchtung vorzugsweise für alle Lichtpulse der Beleuchtungssequenz homogen verteilt.

Es ist für den Spektralsensor eine Steuerungseinrichtung vorgesehen, die dazu eingerichtet ist, die Lichtquellen der Beleuchtungseinrichtung nacheinander ein- und wieder auszuschalten, um das Wertdokument nacheinander mit verschiedenen Emissionsspektren der verschiedenen Lichtquellen zu beleuchten. Die Steuerungseinrichtung kann als Bestandteil des Spektralsensors ausgebildet sein, sie kann aber auch als externe Steuerungseinrichtung, z.B. als Bestandteil einer Vorrichtung zur Wertdokumentbearbeitung, ausgebildet sein, in die der Spektralsensor eingebaut wird. Die Steuereinrichtung ist dazu eingerichtet, die Beleuchtungseinrichtung des Spektralsensors, insbesondere die Lichtquellen, und die Detektionseinrichtung des Spektralsensors anzusteuern. Beim Betreiben des Spektralsensors schaltet die Steuerungseinrichtung die Lichtquellen nacheinander ein und wieder aus, beispielsweise so, dass zu jedem Zeitpunkt genau eine der Lichtquellen eingeschaltet ist. Zu einem oder mehreren der Zeitpunkte können aber auch gleichzeitig mehrere der Lichtquellen eingeschaltet sein, z.B. mehrere Lichtquellen mit gleichem Emissionsspektrum. Außerdem veranlasst die Steuereinrichtung, dass die Detektionseinrichtung während der eingeschalteten Phase der Lichtquellen jeweils einen Messwert erfasst, der der von dem Wertdokument ausgehenden Lichtintensität entspricht. Da die Detektionseinrichtung synchron zur Beleuchtung durch die Lichtquellen jeweils einen Messwert aufnimmt, wird so für diejenigen Wellenlängen, die durch das Emissionsspektrum der jeweiligen Lichtquelle vorgeben sind, die von dem Wertdokument ausgehende Lichtintensität detektiert.

Bei der Konfiguration des Spektralsensors werden die Beleuchtungssequenzen festgelegt, die zur Prüfung des Wertdokuments verwendet werden, insbesondere welche der Lichtquellen zur Beleuchtung des Wertdokuments ein- und ausgeschaltet werden. Die für den Spektralsensor vorgesehene Steuerungseinrichtung kann bereits bei der Herstellung des Spektralsensors konfiguriert werden. Es kann jedoch vorgesehen sein, dass die Konfiguration der Steuereinrichtung erst nach der Fertigstellung des Spektralsensors durchgeführt wird. Ferner kann vorgesehen sein, dass die Konfiguration der Steuereinrichtung auch nach Inbetriebnahme des Spektralsensors veränderbar ist. Ein derartiges Umkonfigurieren nach der Inbetriebnahme kann z.B. durch den Hersteller des Spektralsensors oder durch eine Bedienperson des Spektralsensors oder der Vorrichtung, in der der Spektralsensor eingebaut ist, durchgeführt werden. Beim Umkonfigurieren kann es auch notwendig sein, die Ansteuerung der Detektionseinrichtung an die Ansteuerung der Beleuchtungseinrichtung anzupassen, z.B. wenn die Anzahl der zur Messung ein- und ausgeschalteten Lichtquellen verändert wird. Beim Umkonfigurieren ist auch die Auswerteeinrichtung, die zur Auswertung der detektierten Messwerte verwendet wird, an die veränderte Konfiguration der Steuereinrichtung anzupassen, z.B. wenn zur Prüfung des Wertdokuments andere Lichtquellen verwendet werden sollen.

Vorzugsweise weist der Spektralsensor außerdem ein Gehäuse auf, in dem die Beleuchtungseinrichtung, die Abbildungsoptik und die Detektionseinrichtung, optional auch die Steuereinrichtung und Detektionsoptik, angeordnet sind.

Ein weiterer Aspekt der Erfindung ist ein Verfahren zur Prüfung von Wertdokumenten, das mit Hilfe des oben beschriebenen Spektralsensors durchgeführt werden kann. Zur Prüfung eines Wertdokuments wird das Wertdokument mit einer Transportgeschwindigkeit an dem Spektralsensor vorbeitransportiert. Das Wertdokument wird durch eine Beleuchtungseinrichtung beleuchtet, die eine Vielzahl von Lichtquellen aufweist, deren Emissionsspektren voneinander verschieden sind. Die Vielzahl der Lichtquellen werden beim Beleuchten des Wertdokuments nacheinander ein- und ausgeschaltet, um einen Bereich des Wertdokuments mit einer Beleuchtungssequenz aus Lichtpulsen mit verschiedenen Emissionsspektren zu beleuchten. Das von der Beleuchtungseinrichtung ausgesendete Licht wird mit Hilfe einer Abbildungsoptik auf den beleuchteten Bereich des Wertdokuments abgebildet. Das von den Lichtquellen ausgesendete Licht wird vorzugsweise mit Hilfe einer Sammeloptik gesammelt, die zwischen den Lichtquellen und der Abbildungsoptik angeordnet ist. Das von dem beleuchteten Bereich des Wertdokuments ausgehende Licht wird detektiert. Dabei wird für jeden der Lichtpulse der Beleuchtungssequenz ein Messwert detektiert, um eine spektrale Intensitätsverteilung des von dem beleuchteten Bereich ausgehenden Lichts aufzunehmen. Die Vielzahl der Lichtquellen decken zumindest einen Abschnitt des visuell sichtbaren Spektralbereichs und/oder des Nahinfrarot-Spektralbereich derart ab, dass durch das Detektieren der Messwerte eine spektrale Intensitätsverteilung in dem Abschnitt des visuell sichtbaren Spektralbereichs und/oder des Nahinfrarot-Spektralbereichs aufgenommen wird. Die Vielzahl der Lichtquellen decken zur Unterscheidung der metameren Farben den roten Spektralbereich und/oder den grünen Spektralbereich und/oder den blauen Spektralbereich derart ab, dass in dem jeweiligen Spektralbereich mindestens zwei verschiedene Emissionsspektren der Lichtquellen liegen und/oder sie decken den Nahinfrarot-Spektralbereich von 750 nm bis 1000 nm derart ab, dass in dem jeweiligen Spektralbereich mindestens drei verschiedene Emissionsspektren der Lichtquellen liegen, wobei die Emissionsspektren von mindestens drei der Lichtquellen, die spektral zueinander benachbart sind, spektral überlappen und/oder jeweils voneinander verschiedene Emissionsmaxima aufweisen, deren spektraler Abstand höchstens 60 nm beträgt.

In einem Ausführungsbeispiel weist die Beleuchtungseinrichtung eine Lichtquellen-Aufnahme auf, auf der eine Vielzahl von Lichtquellen-Positionen vorgesehen sind, von denen jede zur Aufnahme einer Lichtquelle ausgebildet ist. Die Lichtquellen-Positionen sind auf der Lichtquellen-Aufnahme nebeneinander angeordnet und werden durch eine Vielzahl individueller Vertiefungen definiert, durch welche jeweils eine chipförmige Lichtquelle aufgenommen werden kann. Die Lichtquellen-Positionen können aber auch durch Erhebungen und/oder durch elektrische Kontaktflächen, die die Lichtquellen-Aufnahme aufweisen kann, definiert werden, die zur Aufnahme einer chipförmigen Lichtquelle ausgebildet sind.

Die Beleuchtungseinrichtung des Spektralsensors kann eine Sammeloptik aufweisen. Die Sammeloptik ist z.B. als Mikrolinsenarray ausgebildet, das eine Vielzahl von Mikrolinsen enthält. Dabei werden das Mikrolinsenarray und die Lichtquellen-Aufnahme derart zueinander angeordnet, dass jeder der auf der Lichtquellen-Aufnahme angeordneten Lichtquellen genau eine der Mikrolinsen zugeordnet ist. Beim Betreiben des Spektralsensors wird so das Emissionslicht jeder der Lichtquellen durch genau eine Mikrolinse des Mikrolinsenarrays gesammelt. Durch die der jeweiligen Lichtquelle zugeordnete Mikrolinse kann das Emissionslicht der Lichtquellen mit hoher Effizienz gesammelt werden. Um eine eineindeutige Zuordnung zwischen den Mikrolinsen und den Lichtquellen zu erhalten, sind die Anordnung der Mikrolinsen in dem Mikrolinsenarray und die Anordnung der Lichtquellen auf der Lichtquellenaufnahme gleich. Beispielsweise sind die Mikrolinsen und die Lichtquellen in dem gleichen zweidimensionalen Raster angeordnet. Bevorzugt ist das Mikrolinsenarray als einstückiger Körper ausgebildet, der Befestigungsmittel aufweist, die integraler Bestandteil des einstückigen Körpers sind. Die Lichtquellen-Aufnahme weist ein zu den Befestigungsmitteln des Mikrolinsenarrays passendes Gegenstück auf.

Durch Verwendung des Mikrolinsenarrays ergeben sich große Vorteile im Vergleich zu einer Beleuchtungseinrichtung, bei der für jede Lichtquelle eine Einzellinse verwendet wird. Denn in diesem Fall müsste für jede der Einzellinsen eine individuelle Halterung vorgesehen werden und bei der Befestigung der Einzellinsen die genaue Positionierung relativ zu der jeweiligen Lichtquelle sicher gestellt werden. Dabei kann es erforderlich sein, dass die genaue Position und/oder Orientierung der Einzellinsen nachträglich justiert werden muss. Demgegenüber reicht bei Verwendung eines Mikrolinsenarrays, das für jede Lichtquelle genau eine Mikrolinse aufweist, eine einzige genaue Positionierung aus. Diese Positionierung kann durch die Befestigungsmittel des Mikrolinsenarrays erfolgen, die mit den entsprechenden Gegenstücken der Lichtquellen-Aufnahme verbunden werden. Die Herstellung des Spektralsensors kann daher viel einfacher und ohne Justage erfolgen. Im Gegensatz zur Realisierung einer entsprechenden Beleuchtung mit Einzellinsen, die einzeln gehaltert werden müssen und bei deren Anordnung immer Zwischenräume verbleiben, besteht bei dem Mikrolinsenarray außerdem zwischen den einzelnen Mikrolinsen kein oder nur ein minimaler Zwischenraum. Da das Mikrolinsenarray als einstückiger Körper ausgebildet ist, können die Mikrolinsen direkt ineinander übergehen. Durch das Mikrolinsenarray kann daher quasi eine flächendeckende Lichtsammlung erreicht werden. Durch das Mikrolinsenarray wird eine Beleuchtungseinrichtung gebildet, die eine hohe Lichtsammeleffizienz aufweist und sehr kompakt ist.

Nachfolgend wird die Erfindung beispielhaft anhand der folgenden Figuren erläutert. Es zeigen:
- Fig. 1: Einen Spektralsensor, der ein an dem Spektralsensor vorbeitransportiertes Wertdokument prüft,
- Fig. 2a: ein Beispiel für die Emissionsspektren der Lichtquellen der Beleuchtungseinrichtung (mit normierter Intensität).,
- Fig. 2b: einen zeitlicher Ablauf der Beleuchtung durch mehrere Beleuchtungssequenzen aus jeweils einer Vielzahl von Lichtpulsen,
- Fig. 3a: einen Ausschnitt eines Wertdokuments, auf dem der beleuchtete Bereich und der Detektionsbereich dargestellt sind,
- Fig. 3b-c: Ausschnitte eines Wertdokuments zum Zeitpunkt des ersten (Fig. 3b) und des letzten Lichtpulses (Fig. 3c) einer Beleuchtungssequenz, wobei die Verschiebung des beleuchteten Bereichs während einer Beleuchtungssequenz gezeigt ist,
- Fig. 4a-b: ein Beispiel für die spektralen Intensitätsverteilungen zweier metamerer Farben, die sich im roten Spektralbereich voneinander unterscheiden, und die Messwerte eines Spektralsensors.

Der Spektralsensor zur Prüfung von Wertdokumenten wird im Folgenden am Beispiel eines Remissionssensors erläutert. Der erfindungsgemäße Spektralsensor kann jedoch auch als Transmissionssensor ausgebildet sein. Dazu wird die Detektionseinrichtung gegenüber liegend zur Beleuchtungseinrichtung angeordnet werden, so dass das durch das Wertdokument transmittierte Beleuchtungslicht detektiert wird.

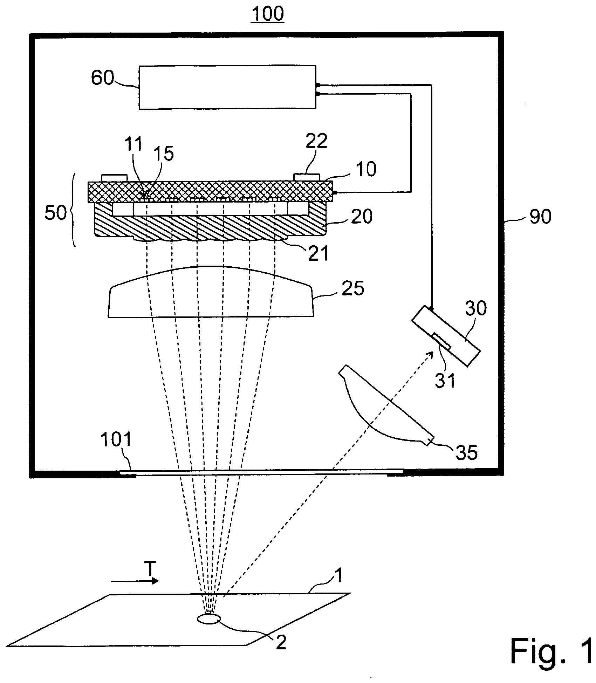

Figur 1 zeigt ein Beispiel eines Spektralsensors 100, der zur Prüfung von Wertdokumenten 1 ausgebildet ist, die an dem Spektralsensor 100 vorbeitransportiert werden. Zur Beleuchtung des Wertdokuments 1 weist der Spektralsensor 100 eine Beleuchtungseinrichtung 50 auf, die mit einer Vielzahl von Lichtquellen 15 mit einer Vielzahl verschiedener Emissionsspektren ausgestattet ist. Das von der Beleuchtungseinrichtung 50 emittierte Beleuchtungslicht wird durch eine Sammeloptik und eine Abbildungslinse 25 auf das Wertdokument 1 abgebildet. Die Sammeloptik 20 ist in diesem Beispiel als Mikrolinsenarray 20 ausgebildet. Um das von der Beleuchtungseinrichtung 50 emittierte Licht auf das Wertdokument 1 abzubilden, können als Abbildungsoptik, alternativ zu der Abbildungslinse 25, aber auch andere optische Komponenten verwendet werden, z.B. Linsensysteme, eine oder mehrere diffraktive optische Komponenten, z.B. Fresnellinsen, oder abbildende Spiegel. Von dem Wertdokument 1 werden, in Abhängigkeit der optischen Eigenschaften des Wertdokuments 1, Anteile des Beleuchtungslichts remittiert. Das von dem Wertdokument 1 remittierte Licht wird mit Hilfe einer Detektionseinrichtung 30 detektiert, die einen lichtempfindlichen Bereich 31 aufweist. Die Detektionseinrichtung 30 kann z.B. durch eine InGaAs-Photodiode oder einen InGaAs-Phototransistor gebildet sein. Vor der Detektionseinrichtung 30 ist eine Detektionsoptik 35 angeordnet, durch die das von dem Wertdokument 1 remittierte Licht gesammelt und auf den lichtempfindlichen Bereich 31 gerichtet wird. Im gezeigten Beispiel wird das Beleuchtungslicht senkrecht auf das Wertdokument 1 abgebildet und die Detektionseinrichtung 30 erfasst das unter schrägem Winkel remittierte Licht. Alternativ kann auch die Beleuchtung unter schrägem Winkel erfolgen und die Detektionseinrichtung 30 das in senkrechter Richtung oder das in schräger Richtung remittierte Licht erfassen.

Bei dem Beispiel der Figur 1 umfasst die Beleuchtungseinrichtung 50 eine Lichtquellen-Aufnahme 10, auf der eine Vielzahl von Lichtquellen-Positionen 11 vorgesehen sind, von denen jede zur Aufnahme einer Lichtquelle 15 ausgebildet ist. Die Lichtquellen-Aufnahme 10 ist z.B. als Leiterplatte ausgebildet und weist eine zum Betreiben der Lichtquellen 15 benötigte elektrische Verdrahtungsstruktur auf (nicht gezeigt), die eine selektive Ansteuerung jeder einzelnen Lichtquelle 15 erlaubt. Die Lichtquellen-Positionen 11 sind in diesem Beispiel durch Vertiefungen in der Lichtquellen-Aufnahme 10 gebildet, in denen jeweils eine Lichtquelle 15 befestigt ist. Zur Bildung einer Beleuchtungseinrichtung 50 werden einige oder alle Lichtquellen-Positionen 11 mit jeweils einer Lichtquelle 15 versehen. Als Lichtquellen 15 werden z.B. LEDs und/oder OLEDs und/oder VCSELs eingesetzt.

Das Mikrolinsenarray 20 der Beleuchtungseinrichtung weist eine Vielzahl von Mikrolinsen 21 auf. Die Lichtquellen-Aufnahme 10 und das Mikrolinsenarray sind so aufeinander abgestimmt, dass jeder der Lichtquellen-Positionen 11 genau eine der Mikrolinsen 21 zugeordnet ist. Zu diesem Zweck sind die Mikrolinsen 21 innerhalb des Mikrolinsenarrays 20 in demselben Raster angeordnet wie die Lichtquellen-Positionen 11 auf der Lichtquellen-Aufnahme 10 angeordnet sind. Das von den einzelnen Lichtquellen 15 emittierte Licht wird durch die über der jeweiligen Lichtquelle 15 angeordnete Mikrolinse 21 gesammelt. Das Mikrolinsenarray 20 ist als einstückiger Körper ausgebildet und wird beispielsweise durch einen Glaskörper oder durch einen transparenten Kunststoffkörper gebildet. Der Durchmesser der einzelnen Mikrolinsen liegt z.B. im µm-Bereich oder im mm-Bereich. Zur Befestigung des Mikrolinsenarrays 20 ist der Körper des Mikrolinsenarrays 20 mit Befestigungsstiften 22 ausgestattet, die in dazu passende Löcher in der Lichtquellen-Aufnahme 10 eingesteckt werden. Durch die Befestigung des Mikrolinsenarrays 20 mittels der Befestigungsstifte 22 wird automatisch die optimale Position des Mikrolinsenarray 20 relativ zu den Lichtquellen 15 erreicht. Bei der Herstellung des Spektralsensors 100 ist daher keine Justage der Beleuchtungseinrichtung 50 erforderlich.

Der Spektralsensor 100 weist ein Gehäuse 90 auf, an dessen Unterseite ein transparentes Fenster 101 angeordnet ist. Das von der Beleuchtungseinrichtung 50 emittierte Licht wird durch das Fenster 101 auf ein zu prüfendes Wertdokument 1 gerichtet, welches an dem Spektralsensor 100 entlang einer Transportrichtung T vorbeitransportiert wird. Die Beleuchtungseinrichtung 50, insbesondere die Lichtquellen 15, und die Detektionseinrichtung 30 werden von einer Steuereinrichtung 60 angesteuert, die in diesem Beispiel innerhalb des Gehäuses 90 angeordnet ist. Die Steuerungseinrichtung 60 schaltet die Lichtquellen 15 nacheinander ein und wieder aus, zum Beispiel so, dass zu jedem Zeitpunkt jeweils genau eine Lichtquelle 15 eingeschaltet ist. Während der eingeschalteten Phase der Lichtquellen erfasst die Detektionseinrichtung 30 jeweils einen Messwert, der der von dem Wertdokument 1 remittierten Lichtintensität entspricht. Das Wertdokument 1 wird nacheinander mit den verschiedenen Emissionsspektren der verschiedenen Lichtquellen 15 beleuchtet. Da die Detektionseinrichtung 30 synchron zur Beleuchtung durch die Lichtquellen 15 jeweils einen Messwert detektiert, wird für die verschiedenen Emissionsspektren der Lichtquellen 15 die von dem Wertdokument 1 remittierte Lichtintensität detektiert.

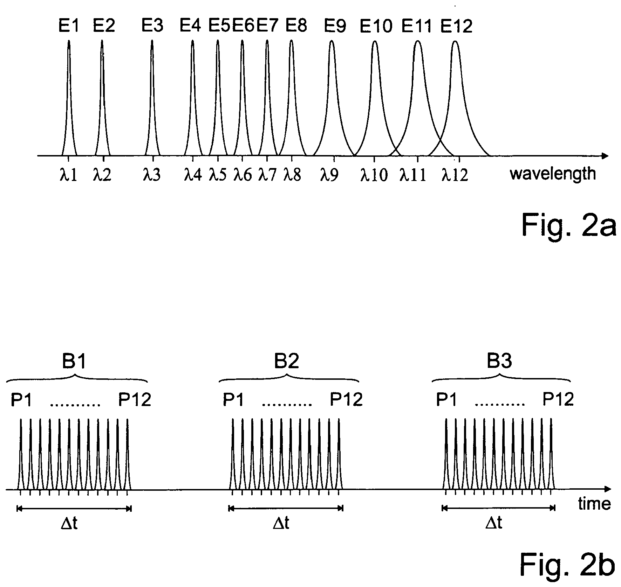

Die Lichtquellen 15 weisen eine Vielzahl verschiedener Emissionsspektren auf. Figur 2a zeigt die Emissionsspektren E1-E12 der Lichtquellen für ein Beispiel, bei dem die Beleuchtungseinrichtung zwölf Lichtquellen 15 aufweist, deren Emissionsspektren zum Teil im visuell sichtbaren Spektralbereich und zum Teil im Nahinfrarot-Spektralbereich liegen. In diesem Beispiel liegen die Emissionsmaxima E1-E12 aller zwölf Lichtquellen 15 bei verschiedenen Wellenlängen λ1-λ12. Die spektralen Abstände zwischen den einzelnen Emissionsmaxima bei λ4-λ8 betragen in diesem Beispiel jeweils weniger als 60 nm. Die Emissionsspektren E10, E11 und E12 der spektral zueinander benachbarten Lichtquellen bei λ10, λ11 und λ12 überlappen spektral miteinander.

Die Steuereinrichtung 60 steuert die Lichtquellen 15 so an, so dass sich die Beleuchtungssequenz B1, mit der die Lichtquellen 15 ein- und ausgeschaltet werden, periodisch wiederholt. Figur 2b zeigt beispielhaft eine Beleuchtungssequenz B1, die aus 12 Lichtpulsen P1-P12 besteht, und periodisch wiederholt wird (B2, B3, ...). Beispielsweise kann die Steuereinrichtung 60 so programmiert sein, dass während jeder der Beleuchtungssequenzen B1, B2, B3 jede Lichtquelle 15 der Beleuchtungseinrichtung 50 genau einmal ein- und ausgeschaltet wird. Alternativ kann dieselbe Lichtquelle 15 auch mehrmals pro Beleuchtungssequenz angesteuert werden, z.B. um die geringe Intensität einer intensitätsschwachen Lichtquelle 15 durch mehrfache Messung zu kompensieren. Eine Beleuchtungssequenz kann entweder die Ansteuerung aller in der Beleuchtungseinrichtung 50 vorhandenen Lichtquellen 15 beinhalten oder nur einer Teilmenge der vorhandenen Lichtquellen 15. Nach der Beleuchtungssequenz B1, d.h. nachdem unter Beleuchtung mit jedem Emissionsspektrum E1-E12, das für die Messung vorgesehen ist, ein Messwert aufgenommen wurde, startet die nächste Beleuchtungssequenz B2, in der erneut unter Beleuchtung mit jedem Emissionsspektrum E1-E12, das für die Messung vorgesehen ist, ein Messwert aufgenommen wird, usw. Zwischen den Beleuchtungssequenzen B1, B2, B3 kann eine Beleuchtungspause liegen. Die während einer Beleuchtungssequenz erhaltenen Messwerte liefern die spektrale Abhängigkeit der Remission des jeweiligen Detektionsbereichs auf dem Wertdokument. Optional können mehrere Messwerte, die in aufeinanderfolgenden Beleuchtungssequenzen, beim Beleuchten mit derselben Lichtquelle detektiert werden, zu einem resultierenden Messwert zusammengefasst. So können z.B. der Messwert, der bei der Beleuchtung mit dem ersten Lichtpuls P1 der ersten Beleuchtungssequenz B1 detektiert wird, und der Messwert, der bei der Beleuchtung mit dem ersten Lichtpuls P1 der zweiten Beleuchtungssequenz B2 detektiert wird, zu einem resultierenden Messwert zusammengefasst werden.

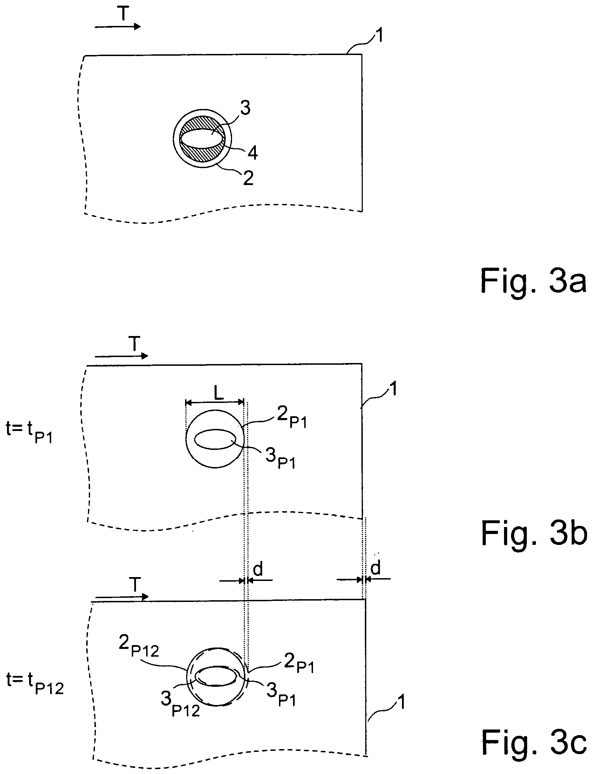

Figur 3a zeigt einen Teilbereich des Wertdokuments 1, auf dem der durch die Beleuchtungseinrichtung 50 beleuchtete Bereich 2 gezeigt ist. Durch die Lichtpulse P1-P12 der Beleuchtungssequenz B1 wird ein Abschnitt 4 des Beleuchtungsbereichs 2 jeweils mit homogener Lichtintensität beleuchtet. Ferner ist der Detektionsbereich 3 gezeigt, der vollständig innerhalb des homogen beleuchteten Abschnitts 4 des Beleuchtungsbereichs 2 angeordnet ist.

Die Dauer Δt der Beleuchtungssequenzen B1, B2, B3, ... ist derart auf die Transportgeschwindigkeit des Wertdokuments 1 abgestimmt, dass durch die verschiedenen Messwerte einer Beleuchtungssequenz zumindest näherungsweise das remittierte Licht desselben Detektionsbereichs 3 auf dem Wertdokument 1 detektiert wird. Zur Illustration zeigen die Figuren 3b und 3c einen Teilbereich des Wertdokuments 1 zu zwei verschiedenen Zeitpunkten t_{P1} und t_{P12}. Der homogen beleuchtete Abschnitt 4 ist in den Figuren 3b, 3c nicht eingezeichnet. Zum Zeitpunkt t_{P1} wird das Wertdokument 1 durch den ersten Lichtpuls P1 der Beleuchtungssequenz B1 beleuchtet, wobei der dabei beleuchtete Bereich mit 2_{P1} und der zugehörige Detektionsbereich mit 3_{P1} bezeichnet ist, vgl. Figur 3b. Durch das Transportieren des Wertdokuments bewegt sich das Wertdokument 1 vom Zeitpunkt t_{P1} bis zum Zeitpunkt t_{P12} um eine Strecke d entlang der Transportrichtung T. Zum Zeitpunkt t_{P12} wird das Wertdokument 1 durch den letzten Lichtpuls P12 der Beleuchtungssequenz B1 beleuchtet, wobei der dabei beleuchtete Bereich mit 2_{P12} und der zugehörige Detektionsbereich mit 3_{P12} bezeichnet ist, vgl. Figur 3c. Außerdem ist in Figur 3c auch nochmals der durch den ersten Lichtpuls P1 beleuchtete Bereich 2_{P1} des Wertdokuments 1 skizziert, der zu dem beleuchteten Bereich 2_{P12} um die Strecke d versetzt ist. Im Vergleich zur Länge L des beleuchteten Bereichs ist die Strecke d jedoch sehr kurz. Die Positionen des beleuchteten Bereichs 2_{P12} und des Detektionsbereichs 3_{P12} auf dem Wertdokument sind daher nur geringfügig versetzt im Vergleich zu den Positionen des beleuchteten Bereichs 2_{P1} und des Detektionsbereichs 3_{P1} auf dem Wertdokument 1. Gegenüber der Länge L des beleuchteten Bereichs ist die Strecke d, die das Wertdokument 1 vom Beginn bis zum Ende derselben Beleuchtungssequenz zurücklegt, so kurz, dass die beiden beleuchteten Bereiche 2_{P1} und 2_{P12} flächenmäßig zu mindestens 75% überlappen.

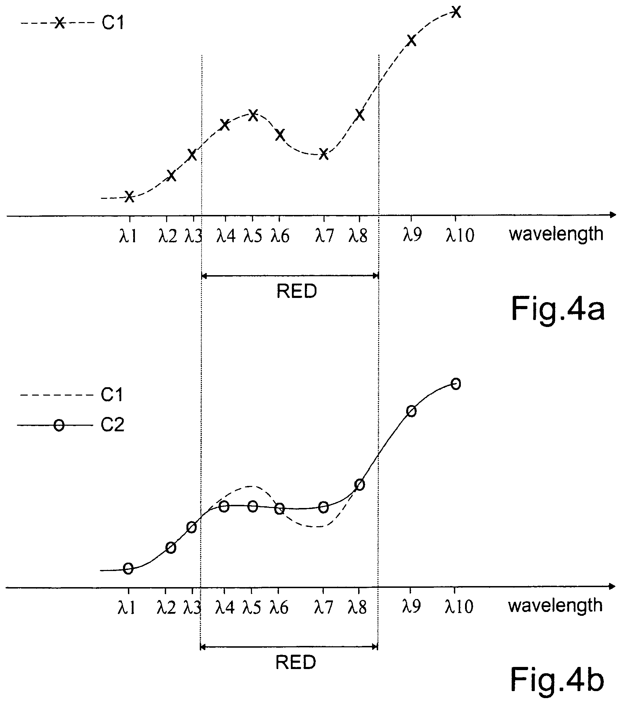

Figur 4a zeigt ein Beispiel eines Remissionsspektrums (gestrichelte Linie) einer ersten Farbe C1. Die Symbole x markieren die Messwerte, die ein Spektralsensor bei der Aufnahme der spektralen Intensitätsverteilung der ersten Farbe C1 detektiert. Zur Aufnahme der spektralen Intensitätsverteilung verwendet dieser Spektralsensor Lichtquellen zehn verschiedener Wellenlängen λ1-λ10, wovon fünf im roten Spektralbereich (RED) liegen (λ4-λ8). In Figur 4b ist neben dem Remissionsspektrum der ersten Farbe C1 auch das Remissionsspektrum einer zweiten Farbe C2 dargestellt (durchgezogene Linie) sowie die mit dem Symbol o bezeichneten Messwerte, die der Spektralsensor bei der Aufnahme der spektralen Intensitätsverteilung der zweiten Farbe C2 detektiert. Die erste Farbe C1 und die zweite Farbe C2 sind zueinander metamere Farben, wobei sich deren Remissionsspektren nur im roten Spektralbereich voneinander unterscheiden und sonst identisch verlaufen.

Bisherige RGB-Sensoren können Remissionslicht im roten Spektralbereich zwar detektieren, sie detektieren jedoch den gesamten roten Farbkanal RED integral. Das bedeutet, es wird die Gesamtintensität des im roten Spektralbereich liegenden Remissionslichts detektiert, unabhängig von dessen spektraler Verteilung innerhalb des roten Spektralbereichs. Ein RGB-Sensor kann zwei Farben nur dann voneinander unterscheiden, wenn sich die beiden Farben in ihrer Gesamtintensität unterscheiden, die der RGB-Sensor von der jeweiligen Farbe in einem seiner Farbkanäle detektiert. Da die beiden Remissionsspektren der Farben C1 und C2, über den roten Spektralbereich betrachtet, dieselbe Fläche aufweisen (vgl. Fig. 4b), würde der RGB-Sensor, der den roten Spektralbereich RED integral misst, von den beiden Farben im Roten dieselbe Gesamtintensität detektieren. Folglich kann der RGB-Sensor die beiden metameren Farben C1 und C2 nicht voneinander unterscheiden.

Der erfindungsgemäße Spektralsensor kann metamere Farben jedoch anhand der spektralen Intensitätsverteilung voneinander unterscheiden, die der Spektralsensor von diesen Farben innerhalb eines Farbkanals aufnimmt. Bei dem Beispiel der Figuren 4a, b kann der Spektralsensor die beiden Farben C1 und C2 durch Vergleichen der spektralen Intensitätsverteilung innerhalb des roten Spektralbereichs unterscheiden, insbesondere durch Vergleichen der fünf Messwerte (x bzw. o), die er bei den Wellenlängen λ4 bis λ8 detektiert.

## Patentansprüche

1. Spektralsensor (100) zur Prüfung eines Wertdokuments (1), das, beim Betreiben des Spektralsensors (100), mit einer Transportgeschwindigkeit an dem Spektralsensor (100) vorbeitransportiert wird, umfassend:
- eine Beleuchtungseinrichtung (50) mit einer Vielzahl von Lichtquellen (15), deren Emissionsspektren (E1-E12) voneinander verschieden sind,
- eine Steuerungseinrichtung, die dazu eingerichtet ist, die Vielzahl der Lichtquellen (15) der Beleuchtungseinrichtung, beim Betreiben des Spektralsensors (100), nacheinander ein- und wieder auszuschalten, um einen Bereich (2) des Wertdokuments (1) mit einer Beleuchtungssequenz (B1) aus Lichtpulsen (P1-P12) mit verschiedenen Emissionsspektren (E1-E12) zu beleuchten, und
- einer Abbildungsoptik (25), durch die das von der Beleuchtungseinrichtung (50) ausgesendete Licht, beim Betreiben des Spektralsensors (100), auf den beleuchteten Bereich (2) des Wertdokuments (1) abgebildet wird, wobei durch die Abbildungsoptik ein klar definierter und räumlich begrenzter Bereich des zu prüfenden Wertdokuments beleuchtet wird, und
- eine Detektionseinrichtung (30) zum Detektieren von Licht, das, beim Betreiben des Spektralsensors (100), von dem mit den Lichtpulsen (P1-P12) der Beleuchtungssequenz (B1) beleuchteten Bereich (2) ausgeht, wobei die Detektionseinrichtung dazu ausgebildet ist, für jeden der Lichtpulse (P1-P12) der Beleuchtungssequenz (B1) einen Messwert zu detektieren, der einer Intensität des detektierten Lichts entspricht,
wobei die Vielzahl der Lichtquellen (15) einen Abschnitt des Nahinfrarot-Spektralbereichs und/oder einen Abschnitt des visuell sichtbaren Spektralbereichs derart abdecken, dass der Spektralsensor (100), durch das Detektieren der Messwerte, eine spektrale Intensitätsverteilung in dem Abschnitt des Nahinfrarot-Spektralbereichs und/oder in dem Abschnitt des visuell sichtbaren Spektralbereichs aufnehmen kann, wobei die Vielzahl der Lichtquellen (15) den roten Spektralbereich und/oder den grünen Spektralbereich und/oder den blauen Spektralbereich und/oder den Nahinfrarot-Spektralbereich von 750 nm bis 1000 nm derart abdecken, dass metamere Farben (C1, C2), die in dem beleuchteten Bereich (2) enthalten sein können, anhand der spektralen Intensitätsverteilung voneinander unterschieden werden können, die der Spektralsensor (100) beim Detektieren des von der metameren Farbe (C1, C2) ausgehenden Lichts aufnimmt, wobei die Vielzahl der Lichtquellen zur Unterscheidung der metameren Farben
- den roten Spektralbereich und/oder den grünen Spektralbereich und/oder den blauen Spektralbereich derart abdecken, dass in dem jeweiligen Spektralbereich mindestens zwei verschiedene Emissionsspektren (E1-E12) der Lichtquellen (15) liegen und/oder
- den Nahinfrarot-Spektralbereich von 750 nm bis 1000 nm derart abdecken, dass in dem jeweiligen Spektralbereich mindestens drei verschiedene Emissionsspektren der Lichtquellen (15) liegen, und wobei die Emissionsspektren von mindestens drei der Lichtquellen (15), die spektral zueinander benachbart sind, spektral überlappen und/oder jeweils voneinander verschiedene Emissionsmaxima aufweisen, deren spektraler Abstand höchstens 60 nm beträgt, und wobei der Spektralsensor dazu ausgebildet ist, die metameren Farben anhand der aufgenommenen spektralen Intensitätsverteilungen, die der Spektralsensor (100) beim Detektieren des von den metameren Farben (C1, C2) ausgehenden Lichts aufnimmt, voneinander zu unterscheiden.

2. Spektralsensor (100) nach Anspruch 1, **dadurch gekennzeichnet, dass** die Lichtquellen (15) so gewählt sind, dass der Spektralsensor (100) eine spektrale Intensitätsverteilung aufnehmen kann, die sich vom visuell sichtbaren Spektralbereich bis in den Nahinfrarot-Spektralbereich erstreckt, vorzugsweise vom visuell sichtbaren Spektralbereich bis mindestens zu einer Wellenlänge von 1000 nm, insbesondere vom visuell sichtbaren Spektralbereich bis mindestens zu einer Wellenlänge von 1200 nm.

3. Spektralsensor (100) nach einem der vorhergehenden Ansprüche, **dadurch gekennzeichnet, dass** die Vielzahl der Lichtquellen (15) den Nahinfrarot-Spektralbereich von 750 nm bis 1000 nm derart abdecken, dass in dem jeweiligen Spektralbereich mindestens fünf verschiedene Emissionsspektren der Lichtquellen (15) liegen.

4. Spektralsensor (100) nach einem der vorhergehenden Ansprüche, **dadurch gekennzeichnet, dass** die Vielzahl der Lichtquellen (15) zudem den Nahinfrarot-Spektralbereich von 1000 nm bis 1600 nm derart abdecken, dass in dem jeweiligen Spektralbereich mindestens drei, vorzugsweise mindestens fünf, verschiedene Emissionsspektren der Lichtquellen (15) liegen.

5. Spektralsensor (100) nach einem der vorhergehenden Ansprüche, **dadurch gekennzeichnet, dass** die Emissionsspektren (E1-E12) der Vielzahl der Lichtquellen (15) mindestens fünf verschiedene Emissionsspektren im visuell sichtbaren Spektralbereich umfassen.

6. Spektralsensor (100) nach einem der vorhergehenden Ansprüche, **dadurch gekennzeichnet, dass** die Emissionsspektren von mindestens fünf der Lichtquellen (15), die spektral zueinander benachbart sind, spektral überlappen und/oder jeweils voneinander verschiedene Emissionsmaxima aufweisen, deren spektraler Abstand höchstens 60 nm beträgt.

7. Spektralsensor (100) nach einem der vorhergehenden Ansprüche, **dadurch gekennzeichnet, dass** die Beleuchtungseinrichtung (50) eine Sammeloptik aufweist, die zwischen den Lichtquellen (15) und der Abbildungsoptik (25) angeordnet ist, um das von den Lichtquellen (15) ausgesendete Licht zu sammeln, wobei die Sammeloptik insbesondere eine Vielzahl nebeneinander angeordneter Linsen aufweist, durch die jeweils das von einer der Lichtquellen (15) ausgesendete Licht gesammelt werden kann.

8. Spektralsensor (100) nach einem der vorhergehenden Ansprüche, **dadurch gekennzeichnet, dass** der Spektralsensor (100) eine Detektionsoptik (35) aufweist, wobei die Detektionsoptik (35) und die Detektionseinrichtung (30) derart ausgebildet und angeordnet sind, dass, beim Betreiben des Spektralsensors (100), von dem Licht, das von dem beleuchteten Bereich (2) ausgeht, nur Licht aus einem Detektionsbereich (3) des Wertdokuments (1) detektiert wird, der vollständig innerhalb des beleuchteten Bereichs (2) angeordnet ist, wobei der Detektionsbereich (3) vorzugsweise vollständig innerhalb eines homogen beleuchteten Abschnitts (4) des beleuchteten Bereichs (2) angeordnet ist.

9. Spektralsensor (100) nach einem der vorhergehenden Ansprüche, **dadurch gekennzeichnet, dass** die Dauer (Δt) der Beleuchtungssequenz (B1) so auf die Transportgeschwindigkeit des Wertdokuments (1) abgestimmt ist, dass alle Lichtpulse (P1-P12), die während der Beleuchtungssequenz (B1) von den Lichtquellen (15) emittiert werden, nahezu denselben Bereich (2) des Wertdokuments (1) beleuchten.

10. Spektralsensor (100) nach einem der vorhergehenden Ansprüche, **dadurch gekennzeichnet, dass** der durch den ersten Lichtpuls (P1) der Beleuchtungssequenz (B1) beleuchtete Bereich (2_{P1}) auf dem Wertdokument (1) und der durch den letzten Lichtpuls (P12) derselben Beleuchtungssequenz (B1) beleuchtete Bereich (2_{P12}) auf dem Wertdokument (1) einen Überlapp von mindestens 75% haben.

11. Spektralsensor (100) nach einem der vorhergehenden Ansprüche, **dadurch gekennzeichnet, dass** die Detektionseinrichtung (30) ein InGaAs-Photodetektor ist, der sowohl zur Detektion von Licht im visuell sichtbaren Spektralbereich als auch zur Detektion von Licht im Nahinfrarot-Spektralbereich ausgebildet ist.

12. Verfahren zur Prüfung von Wertdokumenten, mit den Schritten:
- Vorbeitransportieren eines zu prüfenden Wertdokuments (1) mit einer Transportgeschwindigkeit an einem Spektralsensor (100), der zur Prüfung des Wertdokuments (1) ausgebildet ist,
- Beleuchten des Wertdokuments (1) durch eine Beleuchtungseinrichtung (50) des Spektralsensors (100), die eine Vielzahl von Lichtquellen (15) aufweist, deren Emissionsspektren (E1-E12) voneinander verschieden sind, wobei die Vielzahl der Lichtquellen (15) einen Abschnitt des Nahinfrarot-Spektralbereichs und/oder einen Abschnitt des visuell sichtbaren Spektralbereichs derart abdecken, dass der Spektralsensor (100), durch das Detektieren der Messwerte, eine spektrale Intensitätsverteilung in dem Abschnitt des Nahinfrarot-Spektralbereichs und/oder in dem Abschnitt des visuell sichtbaren Spektralbereichs aufnehmen kann, und wobei die Vielzahl der Lichtquellen (15) den roten Spektralbereich und/oder den grünen Spektralbereich und/oder den blauen Spektralbereich und/oder den Nahinfrarot-Spektralbereich von 750 nm bis 1000 nm derart abdecken, dass metamere Farben (C1, C2), die in dem beleuchteten Bereich (2) enthalten sein können, anhand der spektralen Intensitätsverteilung voneinander unterschieden werden können, die der Spektralsensor (100) beim Detektieren des von der metameren Farbe (C1, C2) ausgehenden Lichts aufnimmt, wobei die Vielzahl der Lichtquellen zur Unterscheidung der metameren Farben
- den roten Spektralbereich und/oder den grünen Spektralbereich und/oder den blauen Spektralbereich derart abdecken, dass in dem jeweiligen Spektralbereich mindestens zwei verschiedene Emissionsspektren (E1-E12) der Lichtquellen (15) liegen und/ oder
- den Nahinfrarot-Spektralbereich von 750 nm bis 1000 nm derart abdecken, dass in dem jeweiligen Spektralbereich mindestens drei verschiedene Emissionsspektren der Lichtquellen (15) liegen,
und wobei die Emissionsspektren von mindestens drei der Lichtquellen (15), die spektral zueinander benachbart sind, spektral überlappen und/oder jeweils voneinander verschiedene Emissionsmaxima aufweisen, deren spektraler Abstand höchstens 60 nm beträgt, und wobei die Vielzahl der Lichtquellen (15) beim Beleuchten des Wertdokuments (1) nacheinander ein- und ausgeschaltet werden, um einen Bereich (2) des Wertdokuments (1) mit einer Beleuchtungssequenz (B1) aus Lichtpulsen (P1-P12) mit verschiedenen Emissionsspektren zu beleuchten,
- Abbilden des von der Beleuchtungseinrichtung (50) ausgesendeten Lichts mit Hilfe einer Abbildungsoptik des Spektralsensors auf den beleuchteten Bereich (2) des Wertdokuments (1), wobei durch die Abbildungsoptik ein klar definierter und räumlich begrenzter Bereich des zu prüfenden Wertdokuments beleuchtet wird,
- Detektieren von Licht, das von dem beleuchteten Bereich (2) des Wertdokuments (1) ausgeht, durch eine Detektionseinrichtung des Spektralsensors, wobei für jeden der Lichtpulse (P1-P12) der Beleuchtungssequenz (B1) ein der Intensität des detektierten Lichts entsprechender Messwert detektiert wird,
- voneinander Unterscheiden der metameren Farben anhand der aufgenommenen spektralen Intensitätsverteilungen, die der Spektralsensor (100) beim Detektieren des von den metameren Farben (C1, C2) ausgehenden Lichts aufnimmt.

13. Verfahren nach Anspruch 12, **dadurch gekennzeichnet, dass** die Beleuchtungssequenz (B1), mit der der Bereich (2) beleuchtet wird, periodisch wiederholt wird.

14. Verfahren nach einem der Ansprüche 12 bis 13, **dadurch gekennzeichnet, dass** mindestens zwei Messwerte, die beim Beleuchten durch jeweils einen Lichtpuls derselben Lichtquelle (15) in verschiedenen, insbesondere aufeinanderfolgenden, Beleuchtungssequenzen (B1, B2) detektiert werden, zu einem resultierenden Messwert zusammengefasst werden.

## Claims

1. A spectral sensor (100) for checking a document of value (1) which, upon the operation of the spectral sensor (100), is transported with a transport speed past the spectral sensor (100), comprising:
- an illumination device (50) with a multiplicity of light sources (15) whose emission spectra (E1-E12) are different from each other,
- a control device which is adapted to successively switch the multiplicity of light sources (15) of the illumination device on and off upon the operation of the spectral sensor (100), in order to illuminate a region (2) of the document of value (1) with an illumination sequence (B1) of light pulses (P1-P12) with different emission spectra (E1-E12), and
- an imaging optic (25) by which the light emitted by the illumination device (50), upon the operation of the spectral sensor (100), is imaged onto the illuminated region (2) of the document of value (1), by the imaging optic a clearly defined and spatially limited region of the document of value to be checked being illuminated, and
- a detection device (30) for detecting light which, upon the operation of the spectral sensor (100), emanates from the region (2) illuminated with the light pulses (P1-P12) of the illumination sequence (B1), the detection device being configured to detect for each of the light pulses (P1-P12) of the illumination sequence (B1) a measured value which corresponds to an intensity of the detected light,
wherein the multiplicity of light sources (15) cover a section of the near-infrared spectral range and/or a section of the visually visible spectral range in such a way that the spectral sensor (100), by the detection of the measured values, can record a spectral intensity distribution in the section of the near-infrared spectral range and/or in the section of the visually visible spectral range,
wherein the multiplicity of light sources (15) covers the red spectral range and/or the green spectral range and/or the blue spectral range and/or the near-infrared spectral range of 750 nm to 1000 nm in such a way that metameric colors (C1, C2), which can be contained in the illuminated region (2), can be distinguished from each other based on the spectral intensity distribution which the spectral sensor (100) records upon the detection of the light emanating from the metameric color (C1, C2), wherein the multiplicity of light sources, for distinguishing the metameric colors,
- cover the red spectral range and/or the green spectral range and/or the blue spectral range in such a way that in the respective spectral range there lie at least two different emission spectra (E1-E12) of the light sources (15) and/or
- cover the near-infrared spectral range of 750 nm to 1000 nm in such a way that in the respective spectral range there lie at least three different emission spectra of the light sources (15),
and wherein the emission spectra of at least three of the light sources (15), which are spectrally adjacent to each other, spectrally overlap and/or have emission maxima respectively mutually different, whose spectral distance is no more than 60 nm, and
wherein the spectral sensor is configured to distinguish the metameric colors from each other based on the recorded spectral intensity distributions which the spectral sensor (100) records upon the detection of the light emanating from the metameric colors (C1, C2).

2. The spectral sensor (100) according to claim 1, **characterized in that** the light sources (15) are chosen such that the spectral sensor (100) can record a spectral intensity distribution which extends from the visually visible spectral range up into the near-infrared spectral range, preferably from the visually visible spectral range up to at least a wavelength of 1000 nm, in particular from the visually visible spectral range up to at least a wavelength of 1200 nm.

3. The spectral sensor (100) according to any of the preceding claims, **characterized in that** the multiplicity of light sources (15) cover the near-infrared spectral range of 750 nm to 1000 nm in such a way that in the respective spectral range there lie at least five different emission spectra of the light sources (15).

4. The spectral sensor (100) according to any of the preceding claims, **characterized in that** the multiplicity of light sources (15) additionally cover the near-infrared spectral range of 1000 nm to 1600 nm in such a way that in the respective spectral range there lie at least three, preferably at least five, different emission spectra of the light sources (15).

5. The spectral sensor (100) according to any of the preceding claims, **characterized in that** the emission spectra (E1-E12) of the multiplicity of light sources (15) comprise at least five different emission spectra in the visually visible spectral range.

6. The spectral sensor (100) according to any of the preceding claims, **characterized in that** the emission spectra of at least five of the light sources (15), which are spectrally adjacent to each other, spectrally overlap and/or have emission maxima respectively mutually different, whose spectral distance is no more than 60 nm.

7. The spectral sensor (100) according to any of the preceding claims, **characterized in that** the illumination device (50) has a collection optic which is arranged between the light sources (15) and the imaging optic (25), in order to collect the light emitted by the light sources (15), whereby the collection optic has in particular a multiplicity of lenses arranged side by side, by which the light respectively emitted by one of the light sources (15) can be collected.

8. The spectral sensor (100) according to any of the preceding claims, **characterized in that** the spectral sensor (100) has a detection optic (35), whereby the detection optic (35) and the detection device (30) are configured and arranged in such a way that, upon the operation of the spectral sensor (100), of the light which emanates from the illuminated region (2) there is detected only light of a detection region (3) of the document of value(1) which is arranged completely within the illuminated region (2), whereby the detection region (3) is arranged preferably completely within a homogeneously illuminated section (4) of the illuminated region (2).

9. The spectral sensor (100) according to any of the preceding claims, **characterized in that** the duration (Δt) of the illumination sequence (B1) is adjusted to the transport speed of the document of value (1) such that all light pulses (P1-P12) which are emitted by the light sources (15) during the illumination sequence (B1) illuminate almost the same region (2) of the document of value (1).

10. The spectral sensor (100) according to any of the preceding claims, **characterized in that** the region (2_{P1}) on the document of value (1) illuminated by the first light pulse (P1) of the illumination sequence (B1) and the region (2_{P2}) on the document of value (1) illuminated by the last light pulse (P12) of the same illumination sequence (B1) have an overlap of at least 75%.

11. The spectral sensor (100) according to any of the preceding claims, **characterized in that** the detection device (30) is an InGaAs photodetector which is configured both for the detection of light in the visually visible spectral range and for the detection of light in the near-infrared spectral range.

12. A method for checking value documents, having the steps of:
- transporting a document of value (1) to be checked with a transport speed past a spectral sensor (100) which is configured for checking the document of value (1),
- illuminating the document of value (1) by an illumination device (50) of the spectral sensor (100), which illumination device has a multiplicity of light sources (15) whose emission spectra (E1-E12) are different from each other, wherein the multiplicity of light sources (15) cover a section of the near-infrared spectral range and/or a section of the visually visible spectral range in such a way that the spectral sensor (100), by the detection of the measured values, can record a spectral intensity distribution in the section of the near-infrared spectral range and/or in the section of the visually visible spectral range, and wherein the multiplicity of light sources (15) covers the red spectral range and/or the green spectral range and/or the blue spectral range and/or the near-infrared spectral range of 750 nm to 1000 nm in such a way that metameric colors (C1, C2), which can be contained in the illuminated region (2), can be distinguished from each other based on the spectral intensity distribution which the spectral sensor (100) records upon the detection of the light emanating from the metameric color (C1, C2), wherein the multiplicity of light sources, for distinguishing the metameric colors,
- cover the red spectral range and/or the green spectral range and/or the blue spectral range in such a way that in the respective spectral range there lie at least two different emission spectra (E1-E12) of the light sources (15) and/or
- cover the near-infrared spectral range of 750 nm to 1000 nm in such a way that in the respective spectral range there lie at least three different emission spectra of the light sources (15),
and wherein the emission spectra of at least three of the light sources (15), which are spectrally adjacent to each other, spectrally overlap and/or have emission maxima respectively mutually different, whose spectral distance is no more than 60 nm, and wherein the multiplicity of light sources (15) are successively switched on and off upon the illumination of the document of value (1), in order to illuminate a region (2) of the document of value (1) with an illumination sequence (B1) of light pulses (P1-P12) with different emission spectra,
- imaging the light emitted by the illumination device (50) with the help of an imaging optic of the spectral sensor onto the illuminated region (2) of the document of value (1), by the imaging optic a clearly defined and spatially limited region of the document of value to be checked being illuminated,
- detecting, by a detection device of the spectral sensor, light emanating from the illuminated region (2) of the document of value (1), wherein for each of the light pulses (P1-P12) of the illumination sequence (B1) there is detected a measured value corresponding to the intensity of the detected light,
- distinguishing the metameric colors from each other based on the recorded spectral intensity distributions which the spectral sensor (100) records upon the detection of the light emanating from the metameric colors (C1, C2).

13. The method according to claim 12, **characterized in that** the illumination sequence (B1) with which the region (2) is illuminated is periodically repeated.

14. The method according to either of claims 12 or 13, **characterized in that** at least two measured values, which are detected upon the illumination by respectively one light pulse of the same light source (15) in different, in particular consecutive illumination sequences (B1, B2), are combined into one resulting measured value.

## Revendications

1. Capteur spectral (100) destiné à l'examen d'un document de valeur (1) transporté lors du fonctionnement du capteur spectral (100) à une vitesse de transport en passant par le capteur spectral (100), comprenant :
- un équipement d'éclairage (50) ayant une pluralité de sources de lumière (15) dont les spectres d'émission (E1-E12) sont différents entre eux,
- un équipement de commande conçu pour allumer et éteindre successivement la pluralité des sources de lumière (15) de l'équipement d'éclairage lors du fonctionnement du capteur spectral (100) afin d'éclairer une zone (2) du document de valeur (1) avec une séquence d'éclairage (B1) composée d'impulsions lumineuses (P1-P12) ayant différents spectres d'émission (E1-E12), et
- une optique d'imagerie (25) par laquelle la lumière émise par l'équipement d'éclairage (50) lors du fonctionnement du capteur spectral (100) est reproduite en image sur la zone (2) éclairée du document de valeur (1), cependant que, par l'optique d'imagerie, une zone clairement définie et spatialement limitée du document de valeur à examiner est éclairée, et
- un équipement de détection (30) pour la détection de lumière qui, lors du fonctionnement du capteur spectral (100), émane de la zone (2) éclairée avec les impulsions lumineuses (P1-P12) de la séquence d'éclairage (B1), cependant que l'équipement de détection est conçu pour détecter, pour chacune des impulsions lumineuses (P1-P12) de la séquence d'éclairage (B1), une valeur de mesure qui correspond à une intensité de la lumière détectée,
cependant que la pluralité de sources de lumière (15) couvrent de telle façon une section de la plage spectrale infrarouge proche et/ou une section de la plage spectrale visuellement perceptible que le capteur spectral (100), par la détection des valeurs de mesure, peut enregistrer une répartition spectrale d'intensité dans la section de la plage spectrale infrarouge proche et/ou dans la section de la plage spectrale visuellement perceptible,
cependant que la pluralité de sources de lumière (15) couvrent de telle façon la plage spectrale rouge et/ou la plage spectrale verte et/ou la plage spectrale bleue et/ou la plage spectrale infrarouge proche comprise entre 750 nm et 1000 nm que des couleurs métamères (C1, C2) qui peuvent être contenues dans la zone éclairée (2) peuvent être différenciées entre elles au moyen de la répartition spectrale d'intensité que le capteur spectral (100) enregistre lors de la détection de la lumière émanant de la couleur métamère (C1, C2), cependant que la pluralité des sources de lumière, pour la différenciation des couleurs métamères,
- couvrent de telle façon la plage spectrale rouge et/ou la plage spectrale verte et/ou la plage spectrale bleue que, dans la plage spectrale respective, il y a au moins deux spectres d'émission différents (E1-E12) des sources de lumière (15) et/ou
- couvrent de telle façon la plage spectrale infrarouge proche comprise entre 750 nm et 1000 nm que, dans la plage spectrale respective, il y a au moins trois spectres d'émission différents des sources de lumière (15),
et cependant que
les spectres d'émission d'au moins trois des sources de lumière (15) qui sont spectralement adjacents les uns aux autres se chevauchent spectralement et/ou présentent des maxima d'émission respectivement différents entre eux dont la distance spectrale est d'au plus 60 nm, et cependant que
le capteur spectral est conçu pour différencier entre elles les couleurs métamères au moyen des répartitions spectrales d'intensité enregistrées que le capteur spectral (100) enregistre lors de la détection de la lumière émanant des couleurs métamères (C1, C2).

2. Capteur spectral (100) selon la revendication 1, **caractérisé en ce que** les sources de lumière (15) sont choisies de telle manière que le capteur spectral (100) peut enregistrer une répartition spectrale d'intensité qui s'étend de la plage spectrale visuellement perceptible jusqu'à la plage spectrale infrarouge proche, de préférence de la plage spectrale visuellement perceptible jusqu'à au moins une longueur d'onde de 1000 nm, en particulier de la plage spectrale visuellement perceptible jusqu'à au moins une longueur d'onde de 1200 nm.

3. Capteur spectral (100) selon une des revendications précédentes, **caractérisé en ce que** la pluralité de sources de lumière (15) couvrent de telle façon la plage spectrale infrarouge proche comprise entre 750 nm et 1000 nm que, dans la plage spectrale respective, il y a au moins cinq spectres d'émission différents des sources de lumière (15).

4. Capteur spectral (100) selon une des revendications précédentes, **caractérisé en ce que** la pluralité de sources de lumière (15) couvrent en outre de telle façon la plage spectrale infrarouge proche comprise entre 1000 nm et 1600 nm que, dans la plage spectrale respective, il y a au moins trois, de préférence cinq spectres d'émission différents des sources de lumière (15).

5. Capteur spectral (100) selon une des revendications précédentes, **caractérisé en ce que** les spectres d'émission (E1-E12) de la pluralité de sources de lumière (15) comprennent au moins cinq spectres d'émission différents dans la plage spectrale visuellement perceptible.

6. Capteur spectral (100) selon une des revendications précédentes, **caractérisé en ce que** les spectres d'émission d'au moins cinq des sources de lumière (15) qui sont spectralement adjacents les uns aux autres se chevauchent spectralement et/ou présentent des maxima d'émission respectivement différents entre eux dont la distance spectrale est d'au plus 60 nm.

7. Capteur spectral (100) selon une des revendications précédentes, **caractérisé en ce que** l'équipement d'éclairage (50) comporte un collecteur optique agencé entre les sources de lumière (15) et l'optique d'imagerie (25) afin de collecter la lumière émise par les sources de lumière (15), cependant que le collecteur optique comporte en particulier une pluralité de lentilles juxtaposées par lesquelles respectivement la lumière émise une des sources de lumière (15) peut être collectée.

8. Capteur spectral (100) selon une des revendications précédentes, **caractérisé en ce que** le capteur spectral (100) comporte une optique de détection (35), cependant que l'optique de détection (35) et l'équipement de détection (30) sont réalisés et agencés de telle façon que, lors du fonctionnement du capteur spectral (100), parmi la lumière émanant de la zone (2) éclairée, seulement de la lumière provenant d'une zone de détection (3) du document de valeur (1) agencée entièrement à l'intérieur de la zone (2) éclairée est détectée, cependant que la zone de détection (3) est de préférence agencée entièrement à l'intérieur d'une section (4) éclairée de façon homogène de la zone éclairée (2).

9. Capteur spectral (100) selon une des revendications précédentes, **caractérisé en ce que** la durée (Δt) de la séquence d'éclairage (B1) est adaptée de telle façon à la vitesse de transport du document de valeur (1) que toutes les impulsions lumineuses (P1-P12) émises durant la séquence d'éclairage (B1) par les sources de lumière (15) éclairent pratiquement la même zone (2) du document de valeur (1).

10. Capteur spectral (100) selon une des revendications précédentes, **caractérisé en ce que** la zone (2_{P1}) éclairée par la première impulsion lumineuse (P1) de la séquence d'éclairage (B1) sur le document de valeur (1) et la zone (2_{P12}) éclairée par la dernière impulsion lumineuse (P12) de la même séquence d'éclairage (B1) sur le document de valeur (1) ont un chevauchement d'au moins 75 %.

11. Capteur spectral (100) selon une des revendications précédentes, **caractérisé en ce que** l'équipement de détection (30) est un photodétecteur InGaAs réalisé tant pour la détection de lumière dans la plage spectrale visuellement perceptible que pour la détection de lumière dans la plage spectrale infrarouge proche.

12. Procédé d'examen de documents de valeur comprenant les étapes :
- transport, à une vitesse de transport, d'un document de valeur (1) à examiner, en passant par un capteur spectral (100) réalisé pour l'examen du document de valeur (1),
- éclairage du document de valeur (1) par un équipement d'éclairage (50) du capteur spectral (100) qui comporte une pluralité de sources de lumière (15) dont les spectres d'émission (E1-E12) sont différents entre eux, cependant que la pluralité des sources de lumière (15) couvrent de telle façon une section de la plage spectrale infrarouge proche et/ou une section de la plage spectrale visuellement perceptible que le capteur spectral (100), par la détection des valeurs de mesure, peut enregistrer une répartition spectrale d'intensité dans la section de la plage spectrale infrarouge proche et/ou dans la section de la plage spectrale visuellement perceptible,
et cependant que la pluralité des sources de lumière (15) couvrent de telle façon la plage spectrale rouge et/ou la plage spectrale verte et/ou la plage spectrale bleue et/ou la plage spectrale infrarouge proche comprise entre 750 nm et 1000 nm que des couleurs métamères (C1, C2) qui peuvent être contenues dans la zone éclairée (2) peuvent être différenciées entre elles au moyen de la répartition spectrale d'intensité que le capteur spectral (100) enregistre lors de la détection de la lumière émanant de la couleur métamère (C1, C2), cependant que la pluralité des sources de lumière, pour la différenciation des couleurs métamères,
- couvrent de telle façon la plage spectrale rouge et/ou la plage spectrale verte et/ou la plage spectrale bleue que, dans la plage spectrale respective, il y a au moins deux spectres d'émission différents (E1-E12) des sources de lumière (15) et/ou
- couvrent de telle façon la plage spectrale infrarouge proche comprise entre 750 nm et 1000 nm que, dans la plage spectrale respective, il y a au moins trois spectres d'émission différents des sources de lumière (15),
et cependant que les spectres d'émission d'au moins trois des sources de lumière (15) qui sont spectralement adjacents les uns aux autres se chevauchent spectralement et/ou présentent des maxima d'émission respectivement différents entre eux dont la distance spectrale est d'au plus 60 nm, et cependant que la pluralité des sources de lumière (15) sont, lors de l'éclairage du document de valeur (1), allumées et éteintes successivement afin d'éclairer une zone (2) du document de valeur (1) avec une séquence d'éclairage (B1) composée d'impulsions lumineuses (P1-P12) ayant différents spectres d'émission,
- reproduction en image de la lumière émise par l'équipement d'éclairage (50), au moyen d'une optique d'imagerie du capteur spectral sur la zone (2) éclairée du document de valeur (1), cependant que, par l'optique d'imagerie, une zone clairement définie et spatialement limitée du document de valeur à examiner est éclairée,
- détection de lumière émanant de la zone (2) éclairée du document de valeur (1), par un équipement de détection du capteur spectral, cependant que, pour chacune des impulsions lumineuses (P1-P12) de la séquence d'éclairage (B1), une valeur de mesure qui correspond à une intensité de la lumière détectée est détectée,
- différenciation entre elles des couleurs métamères au moyen des répartitions spectrales d'intensité enregistrées que le capteur spectral (100) enregistre lors de la détection de la lumière émanant des couleurs métamères (C1, C2).

13. Procédé selon la revendication 12, **caractérisée en ce que** la séquence d'éclairage (B1) avec laquelle la zone (2) est éclairée est répétée périodiquement.

14. Procédé selon une des revendications de 12 à 13, **caractérisée en ce qu'**au moins deux valeurs de mesure qui sont détectées lors de l'éclairage par respectivement une impulsion lumineuse de la même source de lumière (15) dans différentes séquences d'éclairage (B1, B2) en particulier consécutives sont réunies en une valeur de mesure résultante.
